Europäisches Patentamt

European Patent Office

Office européen des brevets

(11) Publication number : **0 478 106 A2**

# (12) EUROPEAN PATENT APPLICATION

(21) Application number : **91304389.9**

(22) Date of filing : **16.05.91**

(51) Int. Cl.⁵ : **F16F 15/12**

(30) Priority : **19.09.90 US 585584**

(43) Date of publication of application :
**01.04.92 Bulletin 92/14**

(84) Designated Contracting States :
**DE ES FR GB IT**

(71) Applicant : **BORG-WARNER AUTOMOTIVE
TRANSMISSION AND ENGINE COMPONENTS
CORPORATION
6700 18-1/2 Mile Road
Sterling Heights, Michigan 48314-8022 (US)**

(72) Inventor : **Pavangat, Nirmal R.
4552 15 Mile Road, Apartment 211
Sterling Heights, Michigan 48310 (US)**

(74) Representative : **Allden, Thomas Stanley et al
A.A. THORNTON & CO. Northumberland
House 303-306 High Holborn
London WC1V 7LE (GB)**

(54) **Long travel damper.**

(57) A torsional vibration damper assembly to transmit torque between driving and driven elements has a hub assembly (26) operatively connected to torque output means and a housing (12) encompassing the hub assembly including sliding skates (42) located within the housing each including a circular hole (72) for reducing the mass of the skates and each including a radially outwardly located arcuate surface (62) engageable with a mating arcuate glide surface (64) on the encompassing housing for producing a controlled lag therebetween and wherein the radially outwardly located arcuate surface of each of the skates has cross-grooves (66) formed therein for flow of transmission fluid at the interface between the skate and the encompassing housing ; the skates are urged radially outwardly into contact with the encompassing housing by centrifugal force and by the radial force of resilient spring means having an end coil (42a) configured to engage hub arm reaction surfaces (37) to produce a spring force precisely on the longitudinal axis of the resilient spring means which force is resolved by side surfaces (58, 60) on each of the skates to produce a uniform radial force between the arcuate surface thereon and the arcuate surface of the encompassing housing as the resilient spring means damp relative movement between the hub and the housing enclosure.

EP 0 478 106 A2

FIG I

FIG IA

## Background and Summary of the Invention

This invention relates to a torsional vibration damper assembly for use in a torsion coupling between a pair of axially aligned shafts, in a clutch for a manual transmission or in a lock-up clutch for a torque converter of an automatic transmission.

USPN 4,304,107 teaches a novel vibration damper assembly which provides a relatively low rate, high amplitude deflection between the torque input and output elements of a torsional vibration damper assembly. The assembly of the '107 patent includes mounting means operatively connected to a torque input, drive members on the mounting means, a hub barrel and drive plates or arms connected together and operatively connected to the torque output, a plurality of sliding skates (referred to as spacers in the '107 text) and resilient spring means positioned in the path of the drive members, sliding skates and drive plates to provide a resilient connection between the mounting means and the hub.

While suitable for its intended purpose, it has been observed in certain applications that the mass of the skate is such that the skates are not always fully responsive to the effect of centrifugal force on the skates as produced upon sudden acceleration changes between the drive members and the hub. Furthermore, in cases where the clutch components are immersed in automatic transmission fluid the interface between the skate and the relatively moving track surfaces on the encompassing housing is at times deprived of a full depth of transmission fluid therebetween so as to cause slight variations in the coulomb damping or friction lag between the skates and the encompassing housing.

Accordingly, the present invention comprehends a novel torsional vibration damper skate which includes first and second passage means therein to reduce the mass of the damper skate and hence the level of centrifugal forces imposed thereon during operation of a torsional vibration damper of the type set forth in the '107 patent.

The present invention also comprehends a novel torsional vibration damper skate which includes a base formed with an arcuate surface which slides on an arcuate surface of an encompassing housing moveable relative to the skate and wherein the skate has a plurality of cross-grooves formed in the arcuate surface for assuring a film of transmission fluid between the damper skate and the encompassing housing at the sliding interface therebetween and to allow more flow of fluid through the contacting surfaces of the skate and the encompassing housing thereby to reduce friction wear and to reduce heat build up in the skate, particularly at higher rotational speeds.

The present invention further comprehends a novel torsional vibration assembly having resilient springs located between hub arms and converging reaction surfaces on wedge shaped skates in which each of the resilient springs has open end coils thereon which align the springs between the hub arms and the skates to direct the spring force along the true longitudinal axis of each of the spring means as the springs are compressed and released in response to relative movement between the encompassing housing and the hub.

Further objects of the present invention are to provide a construction of maximum simplicity, efficiency, economy and ease of assembly and operation, and such further objects, advantages and capabilities as will later more fully appear and are inherently possessed thereby.

## Description of the Drawings

FIG. 1 is a rear elevational view, partially in cross section, of the vibration damper of the present invention;

FIG. 1A is a front elevational view of the vibration damper in FIG. 1;

FIG. 2 is a vertical cross sectional view of the vibration damper assembly taken on line 2-2 of FIG. 1 looking in the direction of the arrows;

FIG. 3 is an enlarged partial cross sectional view of region 3 in FIG. 2;

FIG. 4 is an enlarged side elevational view of an improved skate member used in the present invention;

FIG. 5 is a top elevational view of the skate member of FIG. 4;

FIG. 6 is a vertical sectional view taken along line 6-6 of FIG. 4;

FIG. 7 is an enlarged cross sectional view of region 7 in FIG. 6;

FIG. 8 is a graph showing the static damper characteristics of the illustrated embodiment;

FIG. 9 is an elevational view of a helical compression spring; and

FIG. 10 is an enlarged view of an open ended coil at region 10 in FIG. 9.

## Description of the Preferred Embodiment

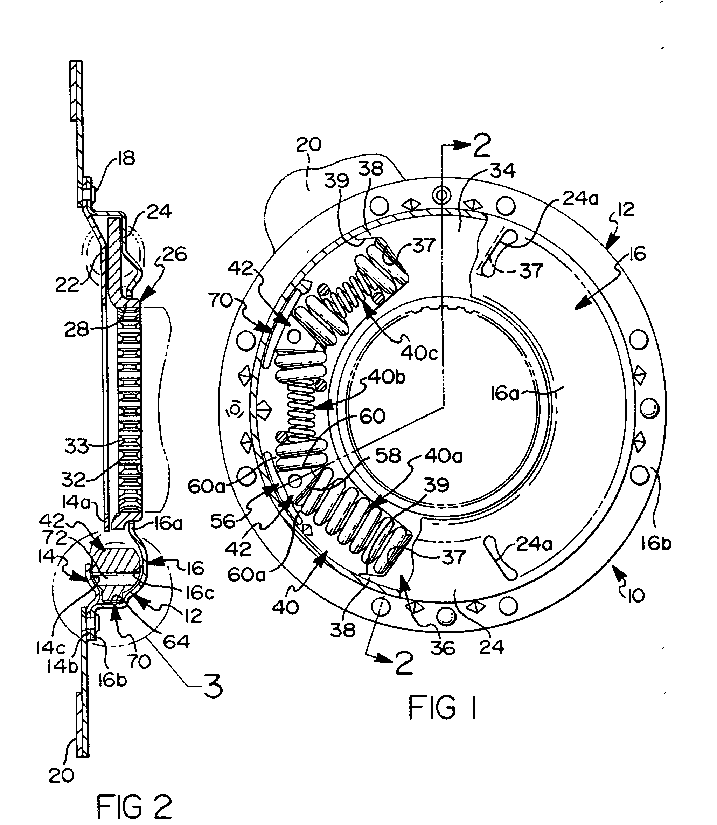

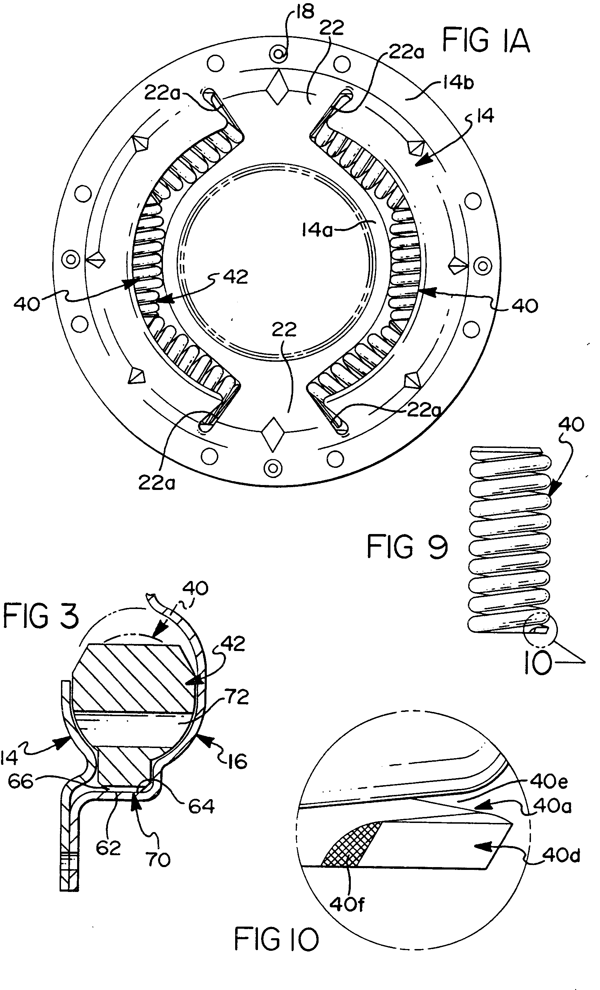

Referring now more particularly to the disclosure in the drawings, FIGS. 1-3 disclose a torsional vibration damper assembly 10 for connection of driving and driven elements (not shown) with it being understood that the assembly 10 is suitable for use as a flexible connection between a pair of axially aligned shafts, as a long travel damper in a lock-up clutch in a torque converter for an automatic transmission or in a clutch in a manual transmission. The damper assembly 10 includes a housing 12 formed of a pair of axially spaced plates 14, 16 each plate having a center segment 14a, 16a respectively and each plate further having a peripheral flange 14b, 16b respectively. The flanges 14b, 16b are joined by a plurality of circumferentially spaced rivets 18. The rivets 18 can also connect the housing 12 to a suitable input mean such as friction surfaces 20 on either a clutch or a lock-up clutch plate for a torque converter as illustrated.

Each of the housing plates 14, 16 further include a pair of diametrically opposed integrally formed drive members 22, 24 which are axially aligned with one another on opposite ends of the housing 12. Each of the drive members 22, 24 have side surfaces 22a, 24a respectively which engage one end of spring sets 40 to be described herein.

A hub 26 includes a central body defined by an axially extending flange 28 which defines a bore 30 receiving a transmission input shaft 32 shown in outline form. The input shaft 32 is coupled to the hub 26 by a plurality of circumferentially spaced splines 33 formed on the inside diameter of the annular flange 28.

The hub 26 further includes a pair of oppositely extending arms 34, 36 which are generally axially aligned with and received between the drive members 22, 24. Each arm 34, 36 has outwardly diverging reaction surfaces 37 terminating in circumferentially extending ledges 38 to define a pocket 39 for receiving one end of a spring set 40 having the opposite end thereof in engagement with a floating skate 42 constructed in accordance with the present invention.

More particularly, the vibration damper assembly 10 of the present invention includes two pairs of floating skates 42 on either side of a center line formed vertically through the center line of the assembly 10 as viewed in FIG. 1. The housing plate 16 is broken away to show two of the floating skates 42 on the left side of the vertical center line with it being understood that a like pair are located diametrically opposite.

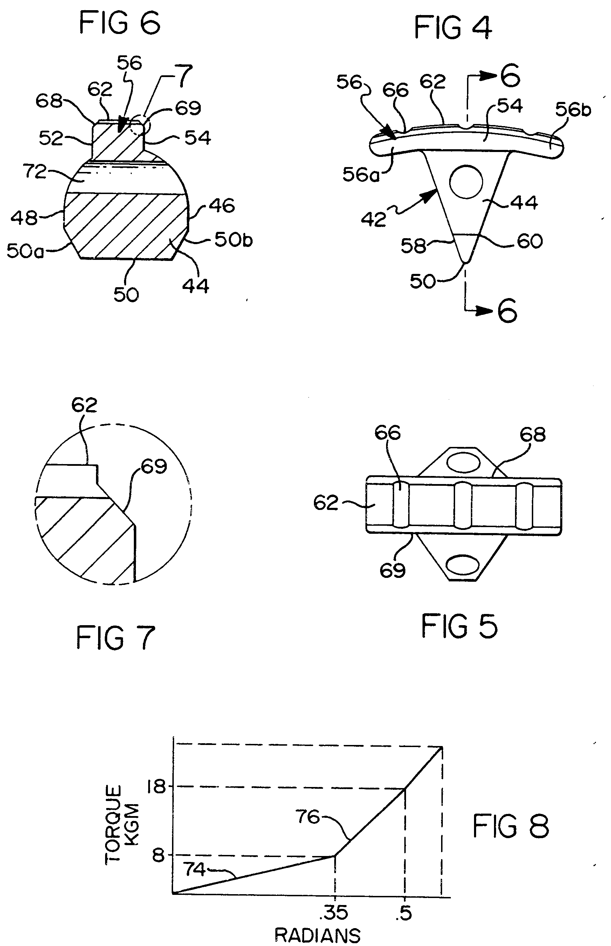

As best shown in FIGS. 4 and 5 each of the skates 42 have a wedge shape formed by a tapered inboard segment 44 including two axially spaced surfaces 46, 48 each having a generally circular shape corresponding to the shape of curved surfaces 14c and 16c on the inner surface of the housing plates 14, 16 respectively. The tip 50 of the tapered inboard segment 44 has opposed inwardly convergent surfaces 50a, 50b to provide clearance between the tip 50 and adjacent surfaces of the housing 12. The surfaces 46, 48 merge with radially directed side surfaces 52, 54 of an arcuate head portion 56 on each of the skates 42. The head portion 56 has extensions 56a, 56b thereon that extend arcuately on either side of the tapered inboard segment 44. The extensions 56a, 56b combine with side reaction surfaces 58, 60 on each of the skate members 42 to define a pocket 60a for receiving the opposite end of each of the spring sets 40.

Each of the skate members 42 has an arcuate wear surface 62 on the head portion 56 which rides on an annular track 64 formed on the housing plate 16.

The track 64 extends around the housing plate 16 and has a width substantially equal to that of the head portion 56.

In one aspect of the invention, the arcuate wear surface 62 has a plurality of grooves 66 formed therein which extend across the width of the head portion 56 to intersect spaced chamfered surfaces 68, 69 which seme as a smooth surface for flow of automatic transmission fluid in which the damper assembly 10 is immersed during its operation. The chamfered surfaces 68, 69 and grooves 66 form a relief path for passage of fluid across the interface 70 formed between the head portion 56 and the housing plate 16. The film of fluid produced by the grooves 66 reduces friction as the skate members 42 are moved with respect to the housing 12 and as a consequence there is a reduction in heat build up in each of the skate members 42 during operation of the torsional vibration damper assembly 10.

Another aspect of the present invention is the provision of a circular hole 72 formed in each of the skate members 44 between the opposite surfaces 46, 48 as is best seen in Figs. 5 and 6. The hole 72 removes a substantial portion of the mass of each of the skate members 44. As a consequence the skate members are less affected by large magnitude centrifugal forces imposed thereon in response to great acceleration between the relatively moveable hub 26 and housing 12.

In the illustrated embodiment of the invention interposed between the hub arms 34, 36 and the skate members 42 are two pairs of diametrically opposite spring sets 40 each of the spring sets 40 formed by three separate spring sub-sets 40a, 40b and 40c. Each of the spring sub-sets 40a-40c is shown as three concentric springs, although one, two or more concentric springs may be utilized. All three spring sets may be of the same rate or the rates may vary depending on the desired damper characteristics; the lowest spring rate spring set 40b normally is between the two floating skate members 42 to damp initial loads imposed on the damper.

The angle of the reaction surfaces 37 on the hub arms 34, 36 and the angle of the side reaction surfaces 58, 60 of each of the floating skate members 42 will cause the skates 42 to be urged outwardly to provide a desired frictional lag for each of the skate members 42 as the housing 12 is rotated relative to the hub 26. As the unit is actuated, a centrifugal force is imposed on each of the skate members 42 which along with the spring force as determined by the angle of the longitudinal axis of each spring set 40a-40c will establish the desired control lag at the arcuate wear surface 62 and annular track 64 which combine to define the interface 70.

In accordance with another aspect of the present invention it is desirable to maintain the load path of the spring sets 40a-40c along the same axis as the spring sets 40a-40c are moved from the illustrated fully extended position to a compressed torsion resisting position. To accomplish this objective each of the spring sets 40a-40c have an open ended coil 40d shown in FIG. 10 which contracts at gap 40e to absorb initial torque and to maintain the load path through the spring during further damping by the unit. The open ended coil 40d is knurled at tip 40f to eliminate tip breakage in fatigue. The open ended coil 40d reduces bending effects on the spring sets 40a-40c which can adversely affect the fatigue life of such spring sets.

The static damper characteristics for the illustrated torsional vibration damper assembly is shown in FIG. 8 with the ordinate representing torque expressed in kilograms per meter and the abscissa representing the relative angular offset of the housing 12 with respect to the hub 16 expressed in radians. The slope line 74 in one embodiment represents a static damper rate of 23 kg-m/rad and the slope line 76 represents a static damper rate of 69.7 kg-m/rad.

The spring sets 40a-40c may have equal or different spring rates in accordance with different damper applications which require different damping characteristics. The skates 42 are configured to provided a controlled friction lag in the damper during actuation thereof in part due to spring forces acting thereon and to centrifugal force acting thereon. The provision of skates having grooves therein allows more flow of fluid through the contacting interface surfaces to thereby reduce friction wear and produce less generation of heat. In the illustrated embodiment the skate members are formed from powdered metal and the reduction of friction and heat in association with such members will increase the durability of the skate especially at high speeds of rotation of the skate members 42. The mass reducing hole 72, while shown of circular cross-section can be of other cross-section including a triangular shape corresponding to the shape of the wedge portion of the skate member 42. In each case the extent of the hole volume is selected to reduce the mass of the skate member 42 thereby to reduce the centrifugal effect and friction build up attributable thereto at high rpms.

Obviously many modifications and variations of the present invention are possible in light of the above teachings. It is, therefore to be understood that within the scope of the appended claims, the invention may be practiced otherwise than as specifically described.

## Claims

1.  A torsional vibration damper assembly to transmit torque between driving and driven elements including a input member (20) operatively associated with torque input means and a hub member (26) operatively connected to torque output means and a housing (12) encompassing the hub member and coupled thereto by resilient means in the form of coil springs (40) disposed between the hub member arms and a plurality of circumferentially spaced skate members (42) located within said housing and each having a radially outer surface (62) thereon engageable with the housing for producing a drag therebetween and the housing at an arcuate interace (70) therebetween and the housing including spaced inside surfaces thereon containing the resilient members and spaced drive members thereon extending into the housing for engaging the resilient members to produce compression thereof with respect to the hub arms in both drive and coast movements of the input member relative to the torque output means characterized by:

    each of the skate members (42) having axially spaced side surfaces (46, 48) thereon congruent with the inner spaced side surfaces (14c, 16c) of said housing and having a V-shaped inboard segment (44) with spaced radially inwardly converging reaction surfaces (58, 60) each adapted to engage one end of each of said coil springs and with an arcuate head portion (56) joined thereto with end extensions (56a, 56b) extending arcuately beyond each of said reaction surfaces;

    first passage means (72) formed in said skate member between the axially spaced surfaces thereon for reducing the mass of said skate member to increase its response to centrifugal forces imposed thereon due to relative movement between said housing and said hub; and

    second passage means (66) formed in said skate member between said axial side surfaces thereof for directing transmission fluid between said skate members and said housing at said arcuate interface therebetween.

2.  A vibration damper assembly to transmit torque between driving and driven elements including a input member (20) operatively associated with torque input means and a hub member (26) with arms (34, 36) operatively connected to torque output means and a housing (12) encompassing the hub member and coupled thereto by resilient means in the form of coil springs (40) disposed between the hub member arms and a plurality of circumferentially spaced skate members (42) located within said housing and each having a radially outer surface (62) thereon engageable with the housing for producing a drag therebetween and the housing at an arcuate interace (70) therebetween and the housing including spaced inside surfaces (14c, 16c) thereon containing the resilient members and spaced drive members (22, 24) thereon extending into the housing for engaging the resilient members to produce compression thereof with respect to the hub arms in both drive and coast movements of the input member relative to the torque output means characterized by:

each of the skate members having axially side surfaces (46, 48) thereon congruent with the inner spaced side surfaces of said housing and having a V-shaped inboard segment (44) with spaced radially inwardly converging reaction surfaces (58, 60) each adapted to engage one end of each of said coil springs and with an arcuate head portion (56) joined thereto with end extensions (56a, 56b) extending arcuately beyond each of said reaction surfaces; and

each of said coil springs (40) having an open end coil (40d) thereon for absorbing initial torque imposed on said coil springs and to impose the spring force along the longitudinal axis of each of said springs during relative rotation between said housing and said hub to reduce bending action on said springs;

said radially inwardly converging reaction surfaces engaging one of said open ended coils and the other of said open ended coils engaging said hub arms to direct a reaction force on each of said skate members in a radial direction along the center line of each of said skate members throughout the relative travel between said housing and said hub.

3. The vibration damper assembly of claim 1 having a skate member further characterized as having first passage means formed as a circular passage (72) formed between said axially spaced walls immediately below said radially outwardly located base portion.

4. The vibration damper assembly of claim 1 having a skate member further characterized as having second passage means formed as shallow grooves (66) formed between said axially spaced walls in the arcuate surface for flow of damping fluid at the interface (70) between said skate member and the arcuate surface (64) of the encompassing housing.

5. The vibration damper assembly of claim 1 having a skate member further characterized as having first passage means formed as a circular passage (72) formed between said axially spaced walls immediately below said radially outwardly located head portion (56) and having second passage means formed as shallow grooves (66) formed between said axially spaced walls in the arcuate surface for flow of transmission fluid at the interface between said skate member and the arcuate surface of the encompassing housing.

6. The vibration damper assembly of claim 1 further characterized by each of said coil spring having an open end coil (40d) thereon for maintaining the spring force on the longitudinal axis of each of said springs;

said radially inwardly converging reaction surfaces (58, 60) engaging one of said open ended coils and the other of said open ended coils engaging said hub arms (34, 36) to direct a reaction force on each of said skate members in a radial direction along the center line (42a) of each of said skate members throughout the relative travel between said housing and said hub.

7. The vibration damper assembly of claim 6 having a skate member further characterized as having first passage means formed as a circular passage (72) formed between said axially spaced walls immediately below said radially outwardly located head portion (56).

8. The vibration damper assembly of claim 6 having a skate member further characterized as having second passage means formed as shallow grooves (66) formed between said axially spaced walls (48, 50) in the arcuate surface (62) for flow of damping fluid at the interface (70) between said skate member and the glide surface (64) of the encompassing housing.

9. The torsional vibration damper assembly of claim 6 having a skate member further characterized as having first passage means formed as a circular passage (72) formed between said axially spaced walls immediately below said radially outwardly located head portion (56) and having second passage means formed as shallow grooves (66) formed between said axially spaced walls (48, 50) in the arcuate surface (62) for flow of transmission fluid at the interface between said skate member and the glide surface (64) of the encompassing housing.

FIG 1

FIG 2

FIG IA

FIG 9

FIG 3

FIG IO

# FIG 6

# FIG 4

# FIG 7

# FIG 5

# FIG 8